# FASCICULE DE BREVET EUROPEEN

(11) **EP 2 739 506 B1**
(45) Date de publication et mention de la délivrance du brevet: **08.05.2019**
(21) Numéro de dépôt: 12744089.9
(22) Date de dépôt: 12.07.2012
(51) Int. Cl.: B60P 1/52, B60P 1/64

(54) **CHARIOT DE TRANSFERT DE CHARGES ET TRAIN COMPOSE DE TELS CHARIOTS.**
WAGEN ZUM TRANSPORTIEREN VON LASTEN UND DARAUS ZUSAMMENGESETZTER ZUG
TROLLEY FOR TRANSPORTING LOADS AND TRAIN CONSISTING OF SUCH TROLLEYS

(30) Priorité: 03.08.2011 FR 1157132
(43) Date de publication de la demande: 11.06.2014
(73) Titulaire: PSA Automobiles SA, 78300 Poissy (FR)
(72) Inventeur: DELEURY, Eric, F-57290 Seremange Erzange (FR); MINETTE, Claude, F-57000 Metz (FR)
(74) Mandataire: Fernandez, Francis Lionel
(86) Numéro de dépôt international: PCT/FR2012/051657
(87) Numéro de publication internationale: WO 2013/017764

(56) Documents cités:
- DE-A1- 2 122 388
- US-A- 3 782 569
- US-A- 3 830 385
- US-A- 3 937 344
- US-B1- 7 137 641

## Description

La présente invention concerne un chariot roulant de transfert de charges.

Le document DE 2 122 388 A1 divulgue le préambule de la revendication indépendante.

L'invention concerne également un train de transfert de charges composé de plusieurs chariots roulants selon l'invention, attelés les uns aux autres.

Actuellement, les charges telles que des pièces de véhicules automobiles contenues dans des emballages sont transportées le plus souvent par des chariots élévateurs équipés de fourches.

Pour transporter de tels emballages, on peut utiliser également des trains tractés composés de plusieurs chariots attelés les uns aux autres.

Cependant, ces chariots sont difficiles à charger et à décharger et posent par conséquent des problèmes d'ergonomie et de sécurité pour le personnel, notamment dans le cas de charges dont le poids est supérieur à 350 kg.

Le but de la présente invention est de remédier aux inconvénients des chariots de transfert ci-dessus.

Ce but est atteint, selon l'invention, grâce à un chariot roulant de transfert de charges, caractérisé en ce qu'il comprend un plateau équipé de rouleaux pour supporter les charges, ce plateau étant inclinable.

Les rouleaux du plateau facilitent le chargement sur ce plateau et le déchargement depuis celui-ci de charges très lourdes contenues dans des emballages volumineux.

De plus, étant donné que le plateau est inclinable, le déchargement peut être effectué sans efforts excessifs grâce à l'effet de la gravité.

Dans un mode de réalisation, les axes des rouleaux sont parallèles à la direction de déplacement du chariot.

De préférence également, le plateau est monté pivotant suivant un axe parallèle à la direction de déplacement du chariot.

Le chariot roulant peut comporter deux ou plus de deux rangées parallèles de rouleaux.

Dans une version particulièrement avantageuse de l'invention, le plateau est monté pivotant entre une première position dans laquelle le plateau est incliné dans un sens et une seconde position dans laquelle ce plateau est incliné dans le sens inverse.

La première position du plateau peut être la position de transport des charges portées par le plateau et la seconde position, la position du déchargement dans laquelle l'inclinaison du plateau et la présence des rouleaux permet grâce à la gravité de décharger les charges pratiquement sans exercer d'efforts.

De préférence, l'axe de pivotement du plateau est décalé par rapport au milieu du plateau.

Ainsi, le centre de gravité des charges supportées par le plateau est également décalé par rapport au milieu du plateau, ce qui facilite le pivotement du plateau entre la première et la seconde position ci-dessus.

Dans une version avantageuse de l'invention, le chariot roulant comprend un levier de commande du pivotement du plateau entre la première position et la seconde position et des moyens pour verrouiller le plateau dans chacune de ces positions.

Dans un mode de réalisation préféré de l'invention, le plateau présente trois positions, à savoir une position de chargement, une position de transport et une position de déchargement.

Selon une autre particularité avantageuse de l'invention, le chariot roulant comprend des butées pour bloquer les charges sur le plateau, ces butées étant mobiles entre une position de blocage desdites charges et une position de déblocage desdites charges.

Ces butées bloquent les charges sur le plateau, notamment lors du déplacement du chariot et débloquent ces charges pour pouvoir les décharger du plateau dans la zone de livraison.

Selon une particularité importante de l'invention, le chariot comprend un dispositif de déverrouillage pouvant être actionné par un appui présent dans la zone de livraison des charges transportées par le chariot pour déverrouiller le levier de commande du pivotement du plateau.

Ainsi, le levier de commande du pivotement du plateau ne peut être déverrouillé que lorsque le chariot est dans la zone de livraison des charges.

Cette particularité évite tout risque de pivotement et de déchargement intempestifs, lors du déplacement du chariot et améliore ainsi la sécurité du personnel.

Selon un autre aspect, l'invention concerne également un train de transfert de charges, composé de plusieurs chariots roulants, selon l'invention, attelés les uns aux autres.

De préférence, chacun des chariots comprend un essieu reliant deux roues avant et un essieu reliant deux roues arrières, chacun des deux essieux étant pivotant suivant un axe vertical et étant accouplés l'un à l'autre par une barre, de telle sorte que le pivotement de l'un des essieux dans un sens, commande le pivotement en sens inverse de l'autre essieu.

Cette disposition permet aux roues de l'essieu arrière de rouler dans les traces des roues de l'essieu avant.

D'autres particularités et avantages de l'invention apparaîtront encore tout au long de la description ci-après.

Aux dessins annexés, donnés à titre d'exemples, non limitatifs :
- la figure 1 est une vue en perspective d'un chariot roulant de transfert de charges selon l'invention, supportant un conteneur,
- la figure 2 est une vue latérale du chariot représenté sur la figure 1, sans le conteneur,
- la figure 3 est une vue de dessus du chariot représenté sur la figure 1, sans le conteneur,
- la figure 4 est une vue en coupe suivant le plan A-A de la figure 2, le plateau étant en position de transport,
- la figure 5 est une vue analogue à la figure 4, le plateau étant dans la position de déchargement d'un conteneur plein,
- la figure 6 est une vue analogue à la figure 5, le plateau étant dans la position de récupération d'un conteneur vide.

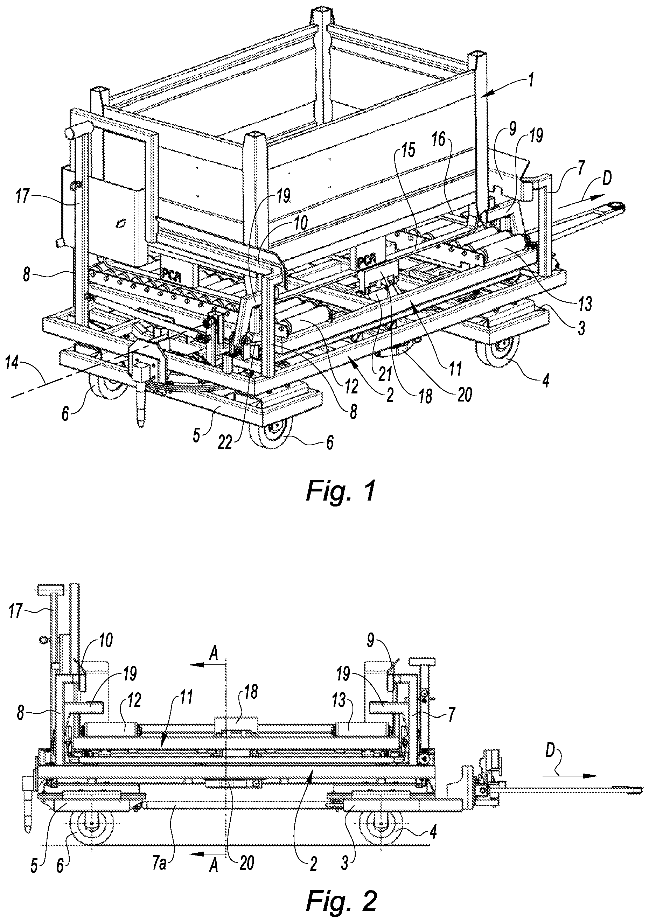

Les figures 1 à 3 représentent un chariot roulant de transfert de charges contenues dans un conteneur 1.

Ce chariot comporte un châssis inférieur 2 supporté par un essieu avant 3 qui relie deux roues avant 4 et par un essieu arrière 5 qui relie deux roues arrière 6.

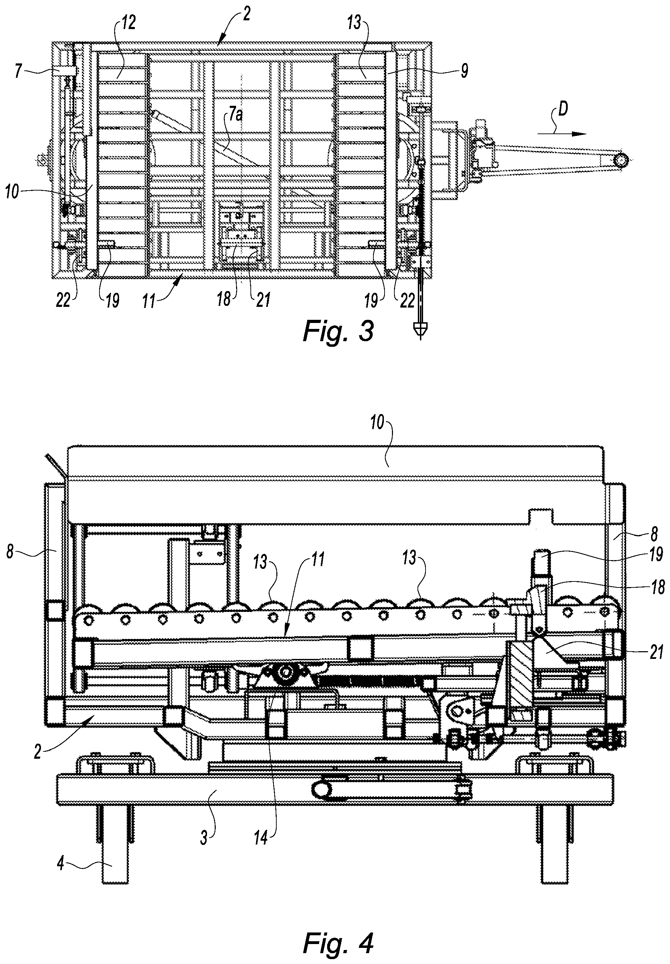

Les essieux avant 3 et arrière 5 sont pivotants suivant un axe vertical et accouplés l'un à l'autre par une barre 7a (voir figures 2 et 3), de telle sorte que le pivotement de l'un des deux essieux 3, 5 dans un sens, commande le pivotement de l'autre essieu en sens inverse.

Ainsi, les roues 6 de l'essieu arrière 5 peuvent rouler dans la trace des roues 4 de l'essieu avant 3.

Le chariot représenté sur les figures 1 à 3 peut être attelé à un ou plusieurs autres chariots pour constituer un train de transfert de charges.

Le châssis 2 du chariot comporte des montants avant 7 et arrière 8 comportant une traverse avant 9 et une traverse arrière 10, entre lesquelles est disposé le conteneur 1.

Le conteneur 1 repose sur un plateau inférieur 11 équipé de rouleaux 12, 13.

Conformément à l'invention, le plateau 11 équipé de rouleaux 12, 13 pour supporter le conteneur 1 est inclinable.

Dans l'exemple représenté, les axes des rouleaux 12, 13 sont parallèles à la direction D de déplacement du chariot.

De plus, le plateau 11 est monté pivotant par rapport au châssis 2 suivant un axe 14 parallèle à la direction D de déplacement du chariot.

Dans l'exemple représenté, le plateau 11 comprend deux rangées parallèles de rouleaux 12, 13 sur lesquelles reposent des barres inférieures 15, 16 du conteneur 1.

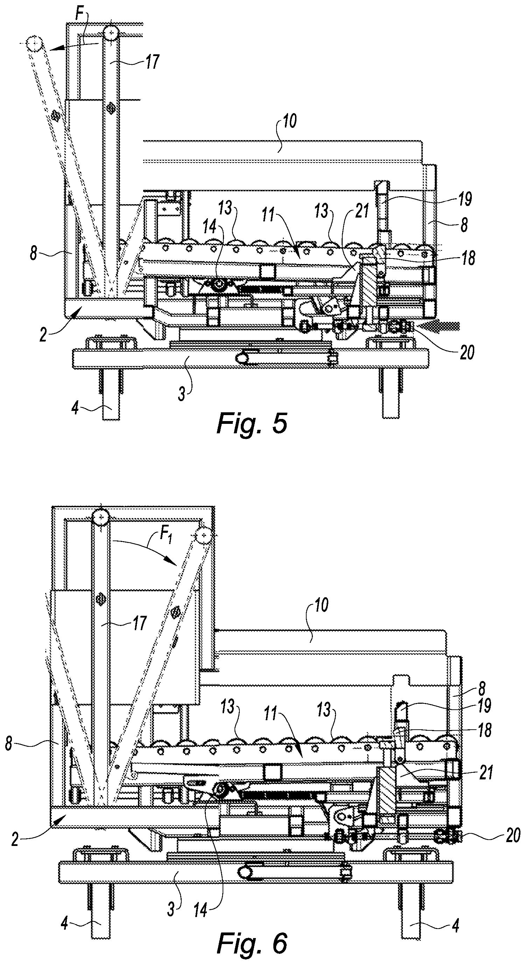

Le plateau 11 est monté pivotant entre une première position (voir figure 4) dans laquelle le plateau 11 est incliné dans un sens et une seconde position (voir figure 5) dans laquelle ce plateau 11 est incliné dans le sens inverse.

A titre d'exemple, l'inclinaison du plateau 11 peut être égale à plus ou moins 10 à 20 mm/m.

La première position, représentée sur la figure 4, est la position de transport du conteneur 1 plein, c'est-à-dire rempli de pièces à transférer vers une zone de livraison ou celle d'un conteneur vide.

La seconde position, représentée sur la figure 5, est la position dans laquelle le conteneur 1 plein peut être déchargé et livré dans la zone de livraison.

Les figures 4 et 5 montrent également que l'axe de pivotement 14 du plateau 11 est décalé vers la gauche par rapport au milieu du plateau 11.

Ainsi, le centre de gravité des charges contenues dans le conteneur reposant sur le plateau 11 favorise le pivotement de celui-ci vers la seconde position, représentée sur la figure 5.

Les figures 1, 2 et 5 montrent qu'à l'arrière du chariot est prévu un levier 17 de commande du pivotement du plateau 11 entre la première position et la seconde position.

Par ailleurs, des moyens sont prévus pour verrouiller le plateau 11 dans chacune de ces positions.

Ces moyens seront décrits plus loin.

En outre, le chariot comprend des butées 18, 19 (voir notamment la figure 1) pour bloquer le conteneur 1 sur le plateau 11.

Ces butées 18, 19 sont mobiles entre une position de blocage du conteneur 1 et une position de déblocage du conteneur 1, dans laquelle ce conteneur 1 peut être déchargé du plateau 11.

Le chariot comporte en outre un dispositif de déverrouillage 20 situé sous le châssis 2.

Ce dispositif de déverrouillage 20 est actionné par un appui (non représenté) situé dans la zone de livraison des charges transportées par le chariot.

Ce dispositif de déverrouillage 20 commande par translation un mécanisme qui déverrouille le levier de commande 17.

Lors du déplacement du chariot vers la zone de livraison, les charges sont transportées dans la position représentée sur la figure 4.

Du fait de l'inclinaison du plateau 11 et des butées 18, 19, les charges ne risquent pas de se déplacer vers le côté de déchargement qui peut être à droite ou à gauche selon les chariots.

De plus, le levier de commande 17 est verrouillé, de sorte que l'inclinaison du plateau 11 ne peut être modifiée lors du déplacement du chariot vers la zone de livraison.

A l'arrivée du chariot dans cette zone de livraison, le dispositif de déverrouillage 20 prévu sous le châssis 2 bute contre un appui situé dans la zone de livraison.

Ce dispositif de déverrouillage 20 actionne par translation un mécanisme qui commande le déverrouillage du levier de commande 17 de l'inversion de la pente de l'inclinaison du plateau 11.

L'actionnement par un opérateur du levier 17 dans le sens de la flèche F représentée sur la figure 5 commande le pivotement du plateau 11 autour de l'axe 14.

L'inversion de l'inclinaison du plateau 11 ne nécessite pas d'effort particulier, du fait du décalage de l'axe 14 et de la gravité exercée par les charges reposant sur le plateau 11.

Le pivotement du levier 17 commande également la descente de la butée centrale 18 et le pivotement vers l'extérieur des deux butées latérales 19.

Le levier 17 est relié par une bielle à un plateau qui peut coulisser sur des rails.

Pour que cette bielle puisse effectuer un mouvement, son verrouillage doit être libéré par une action sur le dispositif de déverrouillage 20.

Le mouvement du levier 17 vers l'extérieur du chariot fait coulisser le plateau ci-dessus vers l'intérieur.

Sur ce plateau sont fixés les éléments 21 et 22 (voir figures 1, 3, 4, 5) qui présentent des pentes sur lesquelles circulent des galets provoquant la montée et la descente des butées 18 et 19.

Sur le plateau ci-dessus est également fixé une forme ayant une pente qui en coulissant vers l'intérieur du chariot permet le basculement du plateau 11.

Le mouvement du levier 17 vers l'intérieur du chariot actionne les mêmes éléments dont la forme symétrique pour les éléments 21, 22 donne le même résultat en permettant aux butées 18, 19 de s'escamoter pour permettre le passage de la charge.

La forme dissymétrique de la forme ci-dessus fixée sur le plateau est telle que le plateau 11 ne s'incline pas.

Le conteneur reposant sur le plateau 11 peut être déchargé facilement compte-tenu de l'inclinaison du plateau 11 et de la présence des rouleaux 12 et 13.

Après déchargement, le plateau 11 est mis en position transport pour récupérer un conteneur vide.

Sur la figure 6, le plateau 11 est en position de récupération d'un conteneur vide.

Le plateau 11 est incliné en sens inverse de l'inclinaison représentée sur la figure 5, c'est-à-dire incliné en position de transport.

La butée centrale 18 et les butées latérales 19 sont escamotées pour permettre le passage du conteneur.

A l'arrivée du chariot dans la zone de livraison du conteneur vide, le dispositif de déverrouillage 20 est enfoncé, ce qui déverrouille le levier 17.

Un opérateur fait pivoter le levier 17 dans le sens de la flèche F₁ pour abaisser la butée centrale 18 et faire pivoter vers l'extérieur les butées latérales 19.

On peut alors charger le conteneur vide.

Les principaux avantages du chariot que l'on vient de décrire sont les suivants.

Il assure une ergonomie nettement améliorée pour le personnel.

En effet, l'inclinaison du plateau 11 et la présence de rouleaux 12, 13 sur celui-ci permet de charger sur ce plateau 11 et de décharger de celui-ci des conteneurs renfermant des charges pesant plus de 350 kg, sans que le personnel ait à exercer d'efforts pour charger et décharger le chariot.

Le chariot garantie au personnel une grande sécurité.

En effet, le déchargement des charges n'est possible que dans la zone de livraison étant donné que la modification de l'inclinaison du plateau 11 et le retrait des butées 18, 19 de maintien de la charge ne peuvent être effectués qu'après enfoncement du dispositif de déverrouillage 20 par des appuis situés dans la zone de livraison.

Les conteneurs pleins ne risquent par conséquent pas de tomber des chariots lors du roulage de ceux-ci et de blesser le personnel.

## Revendications

1. Chariot roulant de transfert de charges, comprenant un plateau (11) équipé de rouleaux (12, 13) pour supporter les charges, ce plateau (11) étant inclinable, monté pivotant suivant un axe (14) parallèle à la direction de déplacement (D) du chariot, le plateau étant monté pivotant entre une première position dans laquelle le plateau (11) est incliné dans un sens et une seconde position dans laquelle ce plateau (11) est incliné dans le sens inverse, **caractérisé en ce que** l'axe (14) de pivotement du plateau (11) est décalé par rapport au milieu du plateau (11).

2. Chariot roulant selon la revendication 1, **caractérisé en ce que** les axes des rouleaux (12, 13) sont parallèles à la direction de déplacement (D) du chariot.

3. Chariot roulant selon l'une des revendications 1 et 2, **caractérisé en ce qu'**il comprend deux ou plus de deux rangées parallèles de rouleaux (12, 13).

4. Chariot roulant selon l'une des revendications 1 à 3, **caractérisé en ce qu'**il comprend un levier (17) de commande du pivotement du plateau (11) entre la première position et la seconde position et des moyens pour verrouiller le plateau (11) dans chacune de ces positions.

5. Chariot roulant selon l'une des revendications 1 à 4, **caractérisé en ce qu'**il comprend des butées (18, 19) pour bloquer les charges sur le plateau (11), ces butées (18, 19) étant mobiles entre une position de blocage desdites charges et une position de déblocage desdites charges.

6. Chariot roulant selon la revendication 5, **caractérisé en ce qu'**il comprend un dispositif de déverrouillage (20) pouvant être actionné par un appui présent dans la zone de livraison des charges transportées par le chariot pour déverrouiller le levier (17) de commande du pivotement du plateau (11).

7. Train de transfert de charges composé de plusieurs chariots roulants selon l'une des revendications 1 à 6, attelés les uns aux autres.

8. Train de transfert selon la revendication 7, **caractérisé en ce que** chacun des chariots comprend un essieu (3) reliant deux roues avant (4) et un essieu (5) reliant deux roues arrières (6), chacun des deux essieux (3, 5) étant pivotant suivant un axe vertical et étant accouplés l'un à l'autre par une barre (7a), de telle sorte que le pivotement de l'un des essieux (3, 5) dans un sens, commande le pivotement en sens inverse de l'autre essieu (3, 5).

## Patentansprüche

1. Rollwagen zum Transferieren von Lasten, der eine Plattform (11) umfasst, die mit Rollen (12, 13) ausgestattet ist, um die Lasten zu tragen, wobei diese Plattform (11) neigbar gemäß einer Achse (14) schwenkbar montiert ist, die zur Bewegungsrichtung (D) des Wagens parallel ist, wobei die Plattform zwischen einer ersten Position, in der die Plattform (11) in eine Richtung geneigt ist, und einer zweiten Position schwenkbar montiert ist, in der diese Plattform (11) in die entgegengesetzte Richtung geneigt ist, **dadurch gekennzeichnet, dass** die Schwenkachse (14) der Plattform (11) in Bezug auf die Mitte der Plattform (11) verschoben ist.

2. Rollwagen nach Anspruch 1, **dadurch gekennzeichnet, dass** die Achsen der Rollen (12, 13) zur Bewegungsrichtung (D) des Wagens parallel sind.

3. Rollwagen nach einem der Ansprüche 1 und 2, **dadurch gekennzeichnet, dass** er zwei oder mehr als zwei parallele Rollenreihen (12, 13) umfasst.

4. Rollwagen nach einem der Ansprüche 1 bis 3, **dadurch gekennzeichnet, dass** er einen Hebel (17) zum Steuern des Schwenkens der Plattform (11) zwischen der ersten Position und der zweiten Position, und Mittel umfasst, um die Plattform (11) in jeder dieser Positionen zu verriegeln.

5. Rollwagen nach einem der Ansprüche 1 bis 4, **dadurch gekennzeichnet, dass** er Anschläge (18, 19) umfasst, um die Lasten auf der Plattform (11) zu arretieren, wobei diese Anschläge (18, 19) zwischen einer Position zum Arretieren der Lasten, und einer Position zum Entarretieren der Lasten beweglich sind.

6. Rollwagen nach Anspruch 5, **dadurch gekennzeichnet, dass** er eine Entriegelungsvorrichtung (20) umfasst, die von einer Stütze betätigt werden kann, welche in der Lieferzone der vom Wagen transportierten Lasten vorhanden ist, um den Hebel (17) zum Steuern des Schwenkens der Plattform (11) zu entriegeln.

7. Transferzug von Lasten, der sich aus mehreren Rollwagen nach einem der Ansprüche 1 bis 6 zusammensetzt, die aneinander angehängt sind.

8. Transferzug nach Anspruch 7, **dadurch gekennzeichnet, dass** jeder der Wagen eine Achse (3) umfasst, die zwei Vorderräder (4) verbindet, und eine Achse (5), die zwei Hinterräder (6) verbindet, wobei jede der zwei Achsen (3, 5) gemäß einer vertikalen Achse schwenkbar ist und dieselben über eine Stange (7a) aneinander gekoppelt sind, sodass das Schwenken der einen der Achsen (3, 5) in eine Richtung das Schwenken der anderen Achse (3, 5) in entgegengesetzte Richtung steuert.

## Claims

1. Travelling load-transfer trolley, comprising a deck (11) equipped with rollers (12, 13) for supporting the loads, this deck (11) being inclinable, mounted so as to pivot on an axis (14) parallel to the direction of movement (D) of the trolley, the deck being mounted so as to pivot between a first position in which the deck (11) is inclined in one direction and a second position in which the deck (11) is inclined in the opposite direction, **characterised in that** the pivot axis (14) of the deck (11) is offset with respect to the middle of the deck (11).

2. Travelling trolley according to claim 1, **characterised in that** the axes of the rollers (12, 13) are parallel to the direction of movement (D) of the trolley.

3. Travelling trolley according to either claim 1 or claim 2, **characterised in that** it comprises two or more than two parallel rows of rollers (12, 13).

4. Travelling trolley according to any of claims 1 to 3, **characterised in that** it comprises a lever (17) for controlling the pivoting of the deck (11) between the first position and the second position and means for chocking the deck (11) in each of these positions.

5. Travelling trolley according to any of claims 1 to 4, **characterised in that** it comprises stops (18, 19) for chocking the loads on the deck (11), these stops (18, 19) being able to move between a position of chocking said loads and a position of releasing said loads.

6. Travelling trolley according to claim 5, **characterised in that** it comprises a release device (20) able to be actuated by a pusher present in the area where the loads transported by the trolley are delivered in order to release the lever (17) controlling the pivoting of the plate (11).

7. Load-transfer train composed of a plurality of travelling trolleys according to any of claims 1 to 6, coupled to each other.

8. Transfer train according to claim 7, **characterised in that** each of the trolleys comprises an axle (3) connecting two front wheels (4) and an axle (5) connecting two rear wheels (6), each of the two axles (3, 5) being pivoting on a vertical axis and being coupled to one another by a bar (7a), so that the pivoting of one of the axles (3, 5) in one direction controls the pivoting of the other axle (3, 5) in the opposite direction.
